(19)

Europäisches
Patentamt

European
Patent Office

Office européen
des brevets

(11)  **EP 4 056 734 A1**

(12)  **EUROPEAN PATENT APPLICATION**

(43) Date of publication:
**14.09.2022  Bulletin 2022/37**

(21) Application number: **21020140.6**

(22) Date of filing: **12.03.2021**

(51) International Patent Classification (IPC):
**C25B 1/04** *(2021.01)*        **C25B 9/05** *(2021.01)*
**C25B 9/19** *(2021.01)*        **C25B 9/77** *(2021.01)*
**C25B 15/021** *(2021.01)*      **C25B 15/08** *(2006.01)*

(52) Cooperative Patent Classification (CPC):
**C25B 1/04; C25B 9/05; C25B 9/19; C25B 9/77;**
**C25B 15/021; C25B 15/083; C25B 15/085**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **L'Air Liquide Société Anonyme pour**
**l'Etude et**
**l'Exploitation des Procédés Georges Claude**
**75321 Paris (FR)**

(72) Inventors:
• **Tadiello, Jean-Philippe**
  **D-60439 Frankfurt am Main (DE)**
• **Svitnic, Tibor**
  **D-39114 Magdeburg (DE)**
• **Nesselberger, Markus**
  **D-60439 Frankfurt am Main (DE)**

(74) Representative: **Stang, Stefan**
  **Air Liquide Forschung und Entwicklung GmbH**
  **Gwinnerstraße 27-33**
  **60388 Frankfurt am Main (DE)**

(54)  **ELECTROLYSER SYSTEM FOR WATER ELECTROLYSIS AND PROCESS THEREFOR**

(57)    The invention relates to an electrolyser system for water electrolysis. The electrolyser system comprises an electrolysis stack and a direct current source, in order to generate oxygen and hydrogen as electrolysis gas by electrolysis of a water containing electrolysis medium. The electrolysis stack comprises an anode section configured to generate oxygen and a cathode section configured to generate oxygen. Furthermore, the electrolyser system comprises an anode gas separator configured to separate oxygen from the electrolysis medium and a cathode gas separator configured to separate hydrogen from the electrolysis medium. The invention is characterised in that at least one of the gas separators comprises a gas separating section and a gas cooling section, wherein the gas cooling section comprises a water inlet connected with a water supply, in order to supply cooling water to the gas cooling section of the gas separator, for the direct cooling of the electrolysis gas separated in the gas separating section of the gas separator within the gas cooling section.

Fig. 1

EP 4 056 734 A1

**Description**

**Technical field**

The invention relates to an electrolyser system for water electrolysis, in particular the gas cooling section of the electrolyser system. Furthermore, the invention relates to a process for performing electrolysis of a water containing electrolysis system, in particular the cooling of the electrolysis gas.

**Background art**

In industrial scale water electrolysis, oxygen and hydrogen are generated in the anode and cathode sections of an electrolysis stack comprising a plurality of anodes and cathodes. Subsequent to the water splitting reaction, enabled by the supply of direct current to the electrolysis stack, the generated electrolysis gas (hydrogen and oxygen) is physically separated from the electrolysis medium by a liquid/gas separator (in the following referred to as "gas separator"). According to electrolysis systems known from the prior art, the separated electrolysis gas is subsequently cooled by indirect cooling, for example by a shell and tube heat exchanger. Thus, water vapour entrained with the electrolysis gas is condensed and afterwards separated in a dedicated separator arranged downstream to the gas separator to trap the condensed water from the cooled electrolysis gas. An example for such an electrolysis system with indirect cooling of the separated electrolysis gas (hydrogen and oxygen) is disclosed in U.S. patent No. 6,033,549. The condensed water is usually drained, thus not recovered.

Through the progression of the electrolysis reaction, water is continuously consumed. So the amount of water consumed must be constantly balanced by the supply of fresh water. On the one hand, so that the amount of electrolysis medium circulating between the gas separator and the electrolysis stack is always the same. On the other hand, so that the concentration of the electrolysis medium, for example a highly concentrated potassium hydroxide (KOH) solution in the case of alkaline electrolysis, can be kept as constant as possible. According to known electrolyser systems, e.g. according to US 6,033,549, the fresh water to offset the consumed water is simply fed from a water supply to the electrolyser system.

Utilisation of dedicated water supply to balance the amount of water in the electrolyser system and utilisation of dedicated cooling and separating equipment downstream to the gas separators results in a certain complexity of the system and process in terms of the number of separate pieces of equipment required to achieve the cooling of the electrolysis gas streams, the trapping of the condensed water from said gas streams and the balancing of the water amount.

Furthermore, condensed water from the gas cooling is drained as a waste water, which means additional costs for waste water management and potential hazardous waste, since the waste water is saturated with hydrogen and oxygen and may contain traces of KOH in case of alkaline electrolysis.

Furthermore, impurities introduced with the water supply to balance out the consumed amount of water directly go into the electrolyte, where they may accumulate. For instance, in case that deionized water with dissolved carbon dioxide is introduced into the alkaline electrolyte, carbonates may form and accumulate in the electrolyte cycle.

**Disclosure of the invention**

It is therefore an object of the present invention to provide an electrolyser system which at least in part overcomes the problems of the prior art.

In particular, an object of the present invention is to provide an electrolyser system which allows a simpler design of the cooling system with regard to the cooling of the electrolysis gases.

In particular, an object of the present invention is to provide an electrolyser system in which as little waste water as possible is produced.

In particular, an object of the present invention is to provide an electrolyser system which allows a smaller design of the cooling system with regard to the cooling of the electrolysis gases compared to cooling systems known from the prior art.

In particular, an object of the present invention is to provide an electrolyser system which prevents impurities introduced with the water supply from accumulating in the electrolyte circuit.

It is a further object of the present invention to provide a method which at least partly solves the aforementioned problems.

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems of the prior art is at least partially solved by an electrolyser system for water electrolysis, comprising an electrolysis stack and a direct current source, in order to generate oxygen and hydrogen as electrolysis gas by electrolysis of a water containing electrolysis medium, the electrolysis stack comprising an anode section configured to generate oxygen and a cathode section configured to generate oxygen; an anode gas separator configured to separate oxygen from the electrolysis medium and a cathode gas separator configured to separate hydrogen from the electrolysis medium;

characterized in that

at least one of the gas separators comprises a gas separating section and a gas cooling section, wherein

the gas cooling section comprises a water inlet connected with a water supply,

in order to supply cooling water to the gas cooling section of the gas separator,

for the direct cooling of the electrolysis gas separated in the gas separating section of the gas separator within the gas cooling section.

According to the invention, at least one of the used gas separators comprises a gas separating section and a gas cooling section. In one embodiment, the gas cooling section is integrated within the gas separator. The gas cooling section of the gas separator comprises an inlet for water connected with a water supply. Hence, water from the water supply may be introduced into the gas cooling section of the gas separator for direct cooling of the electrolysis gas separated within the separating section of the gas separator. Hence, water introduced into the gas cooling section of the gas separator is used as cooling water. Within the gas cooling section of the gas separator, the electrolysis gas is directly cooled by the cooling water from the water supply. This means that heat from the electrolysis gas is directly transferred to the cooling water. That is, the electrolysis gas and the cooling water are in direct contact with each other without, for example, a wall being arranged between the media between which the heat transfer takes place. In this regard, the cooling water introduced to the gas cooling section of the gas separator is heated up by the electrolysis gas to be cooled, and in turn the electrolysis gas is cooled down to a desired temperature before it is withdrawn from the gas separator. At the same time, water vapour contained in the electrolysis gas is condensed and thus passes into the cooling water.

According to this arrangement, no dedicated gas cooler, e.g. a shell and tube heat exchanger arranged downstream to the gas separator is required. Furthermore, a dedicated separator to drain the condensed water vapours from the electrolysis gases can be omitted, as the condensed water vapour from the electrolysis gas is transferred to the liquid phase in the gas separator and therefore can be recycled back to the electrolysis medium. Thus, no hydrogen or oxygen saturated waste water, and/or waste water containing caustic lye is produced, that would have to be disposed of at great expense.

In one embodiment, the gas cooling section comprises a gas inlet for the electrolysis gas withdrawn from the gas separating section of the gas separator. In one embodiment, the gas separating section comprises a gas outlet for the electrolysis gas separated from the electrolysis medium in the gas separating section. In one embodiment, the gas inlet of the gas cooling section and the gas outlet of the gas separating section are interconnected.

In one embodiment, the electrolysis stack comprises a plurality of electrodes, in particular a plurality of anodes and cathodes, the number of anodes and cathodes depending on the size and type of the electrolyser used. The electrolysis medium is also referred to as the electrolyte. In case of alkaline electrolysis, the electrolyte is an aqueous lye solution, in particular highly concentrated aqueous potassium hydroxide (KOH) solution with a concentration of up to 6 mol/l (6 M). In case of proton exchange membrane (PEM) electrolysis, the electrolyte is water. In the anode section of the electrolyser stack, oxygen is produced by oxidation of water bound oxygen (oxidation number minus 2) to molecular oxygen ($O_2$). In the cathode section of the electrolyser stack, hydrogen is produced by reduction of water bound hydrogen (oxidation number plus 1) to molecular hydrogen ($H_2$). The electrolysis medium or electrolyte within the circuit relating to the anode section of the electrolyser is also referred to as the anolyte. The electrolysis medium or electrolyte within the circuit relating to the cathode section of the electrolyser is also referred to as the catholyte.

Within the anode gas separator, oxygen is physically separated from the liquid anolyte. Within the cathode gas separator, hydrogen is physically separated from the liquid catholyte. The anode separator and the cathode gas separator are also referred to as the gas separators. The gas separators are also referred to as gas/liquid separators, as gases are separated from a liquid. The gas separators comprise a gas separating section to separate the electrolysis gas from the electrolysis medium, i.e. the anolyte or the catholyte. The gas separators further comprise a gas cooling section to cool the electrolysis gases by the cooling water supplied by the water supply. The term "electrolysis gas" comprises hydrogen and/or oxygen, i.e. a gas or a gas mixture produced by the electrolysis of water.

In one embodiment, the water supply supplies deionized water or DI water, or distilled water.

In one embodiment, the cooling water supplied to the gas cooling section is used at least in part in order to balance out the water consumption resulting from the electrolysis.

According to this embodiment, the cooling water supplied to the gas cooling section of the gas separator is used to balance out the water consumption resulting from the electrolysis. Thus, the cooling water supplied to the gas cooling section fulfils two functions. First, the cooling of the electrolysis gas and condensing the water vapour entrained in the electrolysis gas and second, to balance out the water consumption resulting from the electrolysis. After cooling the electrolysis gas, the cooling water and the condensed water vapour is recycled from the gas separator back to the respective electrolysis medium (anolyte or catholyte), which is therefore diluted by the cooling water and condensed water vapour and subsequently fed to the electrolysis stack.

In one embodiment, the gas separating section and the gas cooling section are arranged within one common housing.

According to the invention, due to the principle of direct cooling of the electrolysis gas by the cooling water, it is possible to integrate the gas cooling section and the gas separating section of the gas separator within one common housing. No dedicated heat exchanger is required.

In one embodiment, the gas cooling section of the gas separator and the gas separating section of the gas separator are each arranged in their own housing, and the housings are interconnected by the gas outlet of the gas separating section and the gas inlet of the gas cooling section.

In one embodiment, the water inlet of the gas cooling section is arranged in order to conduct the electrolysis gas to be cooled and the cooling water supplied to the gas cooling section in counter-flow.

The efficiency of heat transfer is improved, when the electrolysis gas to be cooled and the cooling water supplied to the gas separator are conducted in counter-flow.

Hence, in one preferred embodiment, the gas cooling section of the gas separator is arranged vertically with respect to the perpendicular mediated by gravity, so that a stream of the cooling water can be conducted from top to bottom within the gas cooling section of the gas separator and a stream of the electrolysis gas can be conducted from bottom to top within the gas cooling section of the gas separator.

In one embodiment, the electrolyser system is operated at elevated pressure, in particular at a pressure of 10 bar or more, or 15 bar or more, or 18 bar or more, preferably 20 bar or more, and wherein the water supplied to the gas cooling section of the gas separator is used to fully balance out the water consumption resulting from the electrolysis.

For electrolyser systems operating at elevated pressures, the fraction of water vapour in the electrolysis gas is lower compared to electrolyser systems operating at low pressure. The amount of water required to balance out the consumed water is a constant value, e.g. a water mass flow or water volume flow, depending on the current density of the current constantly supplied to the electrolyser stack and proportional to the amount of electrolysis gas produced.

At elevated operating pressures, the fraction of water, in particular water vapour, is lower in the electrolysis gas compared to lower operating pressures. So due to the smaller amount of water vapour to be condensed, also a lower cooling capacity of the cooling water is required compared to lower operating pressures. In other words, less water is required for cooling the electrolysis gas to a defined temperature at high operating pressures.

So at elevated pressure, the amount of water required to balance out the water amount consumed by electrolysis can be sufficient to cool the electrolysis gas to a desired temperature. Hence, the water supplied to the gas cooling section of the gas separator can be used to fully balance out the water consumption resulting from electrolysis.

In other words, only the water amount which is required to balance out the water consumption resulting from electrolysis is used to cool down the electrolysis gas. Accordingly, no further cooling equipment will be required to cool down the electrolysis gas to a desired temperature.

Hence, in one embodiment, the electrolyser system is operated at elevated pressure, in particular at a pressure of 10 bar or more, or 15 bar or more, or 18 bar or more, preferably 20 bar or more, and wherein solely an amount of water required to fully balance out the water consumption resulting from electrolysis is supplied as the cooling water to the gas cooling section of the gas separator.

Hence, in one embodiment, the electrolyser system does not comprise any further cooling device to cool the electrolysis gas, in particular hydrogen and/or oxygen, apart from the gas cooling section of the gas separator.

So if the electrolyser system is operated at elevated pressures, in particular the aforementioned pressures, the electrolyser system can further be simplified.

In one embodiment, the electrolyser system comprises an alkaline electrolyser, and the electrolyser system is operated at a pressure of 18 bar or more, preferably 20 bar or more. In one embodiment, the electrolyser system comprises a proton exchange membrane (PEM) electrolyser, and the electrolyser system is operated at a pressure of 23 bar or more, preferably 25 bar or more.

The saturation vapour pressure of pure water is higher than the saturation vapour pressure of an aqueous KOH solution. Hence, at same pressures, the cooling capacity of the cooling water required to cool down the electrolysis gas to a desired temperature is higher for PEM electrolyser systems than for alkaline electrolyser systems. So if only the amount of water consumed by electrolysis is used as the cooling water supplied to the gas cooling section of the gas separator, higher operating pressures are required for PEM systems compared to alkaline electrolyser systems to achieve the required cooling capacity.

In one embodiment, the electrolyser system does not comprise a separator vessel to separate condensed water from cooled electrolysis gases.

As the condensed water vapours from the cooled electrolysis gas are returned to the respective electrolysis medium, a dedicated separator vessel to separate condensed water from cooled electrolysis gases can be omitted.

In one embodiment, the water inlet comprises a nozzle to introduce the cooling water as a spray into the gas cooling section of the gas separator.

To increase the surface for heat and material exchange between the electrolysis gas to be cooled and the cooling water supplied to the gas cooling section of the gas separator, the cooling water is supplied into the gas cooling section through a nozzle as a spray. According to this gas scrubbing principle, any potential KOH in the gas stream, detrimental to the gas purification equipment, is washed out by the cooling water spray. Furthermore, impurities introduced by the cooling water such as carbon dioxide are stripped out, preventing accumulation in the respective electrolyte.

In one embodiment, a chiller is arranged between the water supply and the water inlet to pre-cool the cooling water supplied to the gas cooling section.

In case the stream of the electrolysis gas needs to be cooled below the prevailing ambient temperature, a chiller unit can be included to pre-cool the cooling water supplied to the gas cooling section of the gas separator.

In general, at least one of the underlying problems of the prior art is further at least partially solved by a process for performing electrolysis of a water containing electrolysis medium to generate oxygen and hydrogen as electrolysis gas, comprising the process steps of

- supplying a direct current to an electrolysis stack;
- subjecting the water containing electrolysis medium to electrolysis in the electrolysis stack, wherein the electrolysis stack comprises an anode section and a cathode section, wherein oxygen is generated in the anode section and hydrogen is generated in the cathode section;
- separating the generated oxygen from the electrolysis medium in an anode gas separator and separating the generated hydrogen from the electrolysis medium in a cathode gas separator;
- introducing cooling water from a water supply into at least one of the gas separators, for the direct cooling of the electrolysis gas separated in a gas separating section of the gas separator by the cooling water within a gas cooling section of the gas separator.

In one embodiment, the electrolysis gas is cooled by the cooling water to 10 °C above ambient temperature or less. In one further embodiment, the cooling water is heated to 10 °C below the operating temperature of the electrolyser system or less.

In one embodiment, the cooling water introduced to the gas separator is used at least in part in order to balance out the water consumption resulting from the electrolysis.

In one embodiment, the electrolysis gas to be cooled and the cooling water are conducted within the gas cooling section of the gas separator in counter-flow.

In one embodiment, the electrolysis is performed at elevated pressure, in particular at a pressure of 10 bar or more, or 15 bar or more, or 18 bar or more, preferably 20 bar or more, and wherein the cooling water supplied to the gas cooling section of the gas separator is used to fully balance out the water consumption resulting from the electrolysis.

In on embodiment, the electrolysis is performed at elevated pressure, in particular at a pressure of 10 bar or more, or 15 bar or more, or 18 bar or more, preferably 20 bar or more, and wherein only the amount of water required to fully balance out the water consumption resulting from electrolysis is used as cooling water for the direct cooling of the electrolysis gas within the gas cooling section of the gas separator.

In one embodiment, the cooling water is introduced as a spray to the gas cooling section of the gas separator.

In one embodiment, the cooling water from the water supply is pre-cooled before it is introduced to the gas cooling section of the gas separator.

In general, at least one of the underlying problems of the prior art is further at least partially solved by use of the electrolysis system according to the invention for the large-scale production of hydrogen by water electrolysis.

**Detailed description of exemplary embodiments**

The invention will now be detailed by way of exemplary embodiments and examples with reference to the attached drawings. Unless otherwise stated, the drawings are not to scale. In the figures and the accompanying description, equivalent elements are each provided with the same reference marks.

In the drawings

Figure 1 depicts a simplified flow diagram of an electrolyser system 10 according to one embodiment of the invention,

Figure 2    depicts a simplified flow diagram of an electrolyser system 11 according to the state of the art.

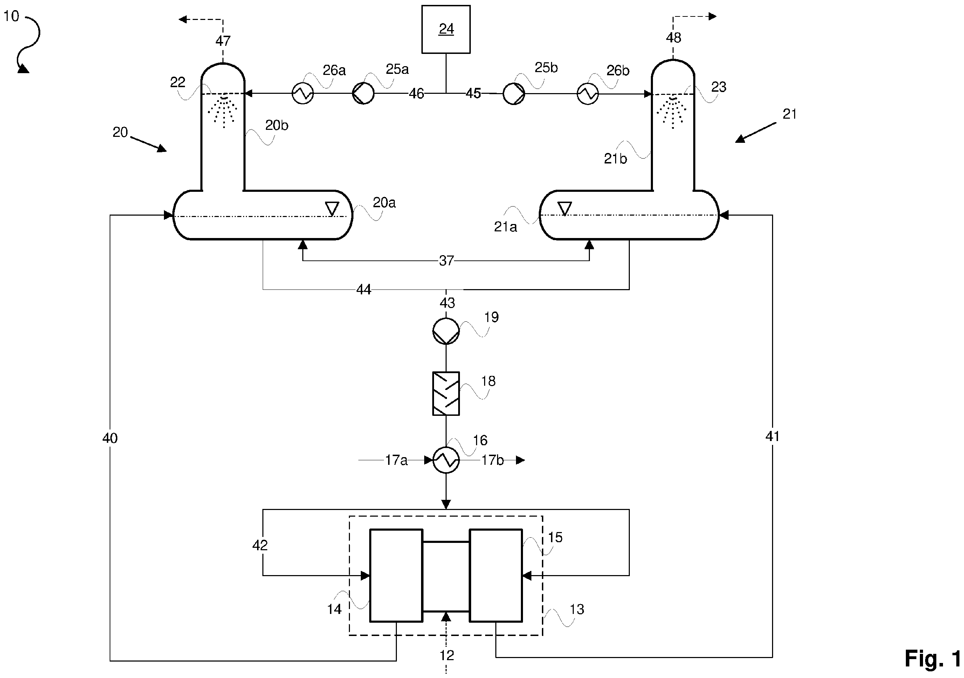

Figure 1 depicts one embodiment of an electrolyser system 10 according to the invention. The electrolyser system 10 comprises an electrolyser stack 13, the electrolyser stack comprising an anode section 14 for the generation of oxygen and a cathode section 15 for the generation of hydrogen. The electrolyser stack is supplied with direct current 12 from a rectifier (not shown). The electrolyser system 10 further comprises an anode gas separator 20 for the physical separation of gaseous oxygen from the liquid electrolyte, i.e. the anolyte. The electrolyser system 10 further comprises a cathode separator 21 for the physical separation of gaseous hydrogen from the liquid electrolyte, i.e. the catholyte. The anolyte circulates between the anode separator 20 and the anode section 14 of the electrolysis stack 13 via conduits 40, 44, 43 and 42. The catholyte circulates between the cathode separator 21 and the cathode section 15 of the electrolysis stack 13 via the conduits 41, 44, 43 and 42. The electrolyser stack 13 comprises a plurality of anodes and cathodes within the respective anode and cathode section, whereby the cathode section 15 and the anode section 14 are presented in a simplified form for the sake of clarity. At the surfaces of the anodes and cathodes, gaseous hydrogen and oxygen is generated and subsequently accumulates in the catholyte and the anolyte respectively. The anode section 14 and the cathode section 15 are physically separated by a membrane (not shown) so that no mixing of the anolyte and catholyte within the electrolysis stack occurs. The membrane enables the transfer of ions between the anode section 14 and the cathode section 15, e.g. hydroxyl ions in the case of alkaline electrolysis or protons in the case of proton exchange membrane electrolysis. In case of alkaline electrolysis, the circulating electrolyte is an aqueous KOH solution. In case of PEM electrolysis, the circulating electrolyte is water.

The gas separators 20 and 21 each comprise a gas separating section 20a (anode gas separator) and 21a (cathode gas separator). As the anolyte and catholyte solution carrying the electrolysis gas heat up in the electrolysis stack 13 through partial conversion of electrical energy into thermal energy, the electrolysis gas separated in the gas separators 20 and 21 has to be cooled to a desired temperature, for example to 15 °C according to the example of Figure 1. Thus, cooling water from a water supply 24 is introduced into a gas cooling section 20b (anode gas separator) respectively gas cooling section 21b (cathode gas separator) of the gas separators 20 and 21. The gas cooling sections 20b and 21b both comprise a gas inlet for the electrolysis gas withdrawn from the gas separating sections 20a, 21a (not shown). The cooling water is withdrawn from the water supply 24 via conduits 46 and 45 respectively and supplied to the gas separators 20, 21 via pumps 25a and 25b respectively. As the electrolysis gas has to be cooled below the prevailing ambient temperature (30 °C), the cooling water supplied via lines 46 and 45 is pre-cooled by chillers 26a and 26b respectively. The gas separators 20 and 21 each comprise a cooling water inlet (not shown) at the top of the gas separators 20 and 21, through which the pre-cooled cooling water of the water supply 24 is introduced into the gas cooling sections 20b and 21b of the gas separators. The gas separators also each comprise a nozzle 22 (anodes gas separator) and 23 (cathode gas separator) so that the cooling water introduced into the gas cooling section is distributed as a spray. The gas cooling sections 20b and 21b are arranged vertically, so that the cooling water is conducted from top to bottom of the gas cooling sections 20b, 21b, in counter-flow to the electrolysis gas to be cooled, which flows from bottom to top within the gas cooling sections 20b and 21b.

Within the gas cooling sections 20b and 21b, heat from the electrolysis gas is directly transferred to the water spray of the cooling water, so that the electrolysis gas (hydrogen and oxygen) is cooled. Cooled oxygen is withdrawn from anode gas separator 20 via conduit 47. Cooled hydrogen is withdrawn from cathode gas separator 21 via conduit 48. Water vapour contained in the electrolysis gas to be cooled is condensed by the cooling water, so that water separated from electrolysis gas is recycled back to the gas separating sections 20a, 21a of the gas separators and finally fed back to the electrolyte and the electrolysis stack via conduits 44, 43 and 42. The vertically arranged gas cooling sections 20b, 21b of the gas separators 20, 21 function according to the principle of gas scrubbing. So for the case of alkaline electrolysis, any caustic KOH present in the water vapour of the electrolysis gas is scrubbed out by the cooling water and returned to the electrolyte solution. The cooled and dried product gases oxygen and hydrogen are finally withdrawn from the gas separators 20 and 21 via conduits 47 and 48 respectively.

The electrolyser system according to the flow diagram of Figure 1 is operated at elevated pressure, e.g. at 20 bar (alkaline electrolysis) or 25 bar (PEM electrolysis). Hence, the fraction of water vapour present in the electrolysis gases is relatively low compared to a system operating at low pressure, e.g. a pressure of 2-5 bar. For such a scenario, the water required to balance out the amount of water consumed by the electrolysis is sufficient to cool the electrolysis gases to the desired temperature. Hence, no additional cooling device for cooling of the electrolysis gas is required. In case the electrolysis gas is cooled only to ambient temperature, also the chillers 26a and 26b can be omitted. Furthermore, as the cooling water supplied to the anode gas separator 20 and the cathode separator 21 is at the same time used to balance out the water amount consumed by the electrolysis, no further water supply is required for this purpose. Hence, the electrolysis system according to Figure 1 can be built much more simply than known systems.

To balance the liquid level between the anode gas separator 20 and the cathode gas separator 21, both gas separators 20, 21 are connected via a hydraulic link 37.

The oxygen depleted anolyte is withdrawn from the anode gas separator 20 via conduit 44. The hydrogen depleted catholyte is withdrawn from the cathode gas separator 21 via conduit 44. The electrolysis gas depleted electrolytes are merged in conduit 43 and introduced into a mixing device 18 via pump 19, so that any concentration difference between the anolyte and catholyte is balanced. The electrolyte is subsequently cooled in electrolyte cooler 16, which is supplied with cooling water via conduit 17a, which in turn is withdrawn from electrolyte cooler 16 via conduit 17b. The cooled electrolyte is subsequently split into two fractions and introduced into the anode section 14 and cathode section 15 of the electrolysis stack 13 via conduit 42.

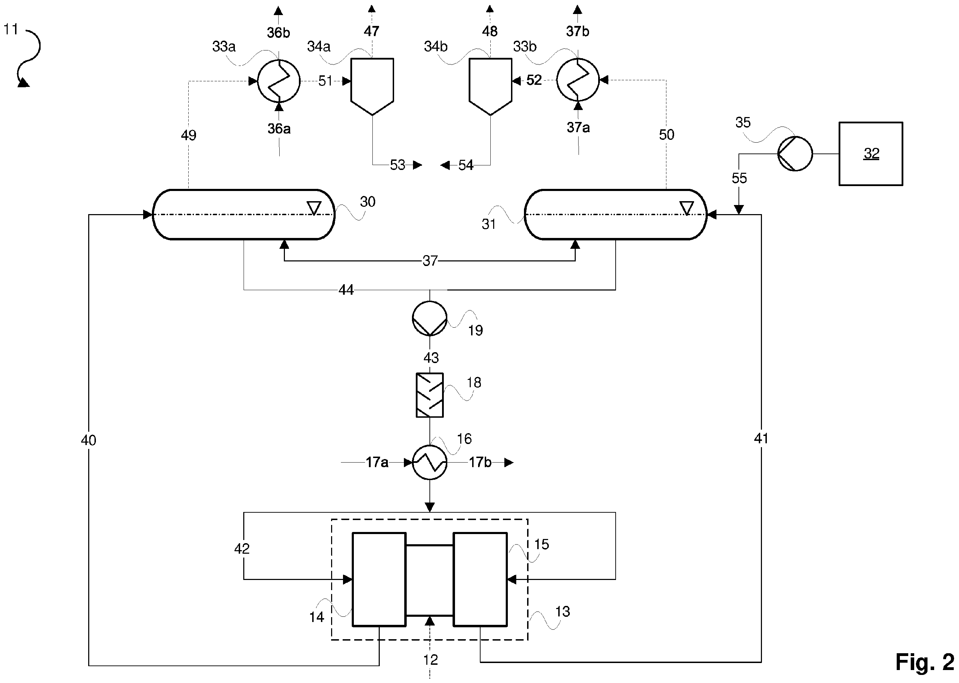

Figure 2 depicts an electrolyser system according to the state of the art. Here, the water required to balance out the water amount consumed by the electrolysis is supplied by a water supply 32 via conduit 55 and pump 35. Thus, the cooling potential of the water of water supply 32 is not used. Instead, the electrolysis gas withdrawn from the anode gas separator 30 via conduit 49 (oxygen) and from the cathode gas separator 31 via conduit 50 (hydrogen) is fed to dedicated heat exchangers 33a (anolyte) and 33b (catholyte) via conduits 51 and 52. Heat exchangers 33a and 33b each require a dedicated cooling water supply, the cooling water supplied via conduits 36a and 37a and withdrawn from the heat exchangers 33a, 33b vial conduits 36b and 37b. In the heat exchangers 33a, 33b, water vapour contained in the electrolysis gas is condensed. The cooled electrolysis gas with condensed water is fed to the separators 34a (oxygen) and 34b (hydrogen) via conduits 51 and 52. In the separators 34a, 34b, condensed water from electrolysis gas is separated and drained via conduits 53 (condensed water vapour from oxygen) and 54 (condensed water vapour from hydrogen). The cooled and dried electrolysis gas is withdrawn via conduits 47 (oxygen) and 48 (hydrogen) from the separators 34a, 34b.

The water of condensed water vapour withdrawn via conduits 53 and 53 is saturated with hydrogen and oxygen. Furthermore, in the case of alkaline electrolysis, it may contain residual caustic lye, e.g. KOH. Hence, this water has to subjected to a suitable waste water treatment.

The following numerical example represents an exemplary case in that the amount of water required to balance out the water consumed by electrolysis has a sufficiently high cooling potential. In that case, the electrolyser system is operated at elevated pressure. For such a case, no further cooling equipment for the cooling of the electrolysis gas, apart from a cooling section 20b, 21b of a gas separator 20, 21, is required.

The following operating conditions are typical operating conditions of a high pressure alkaline water electrolysis.

- 68 $Nm^3$/h of hydrogen and 34 $Nm^3$/h of oxygen are produced;
- Aqueous KOH solution with 30 wt.-% KOH is used as the electrolyte;
- The product gases hydrogen and oxygen are produced at 90 °C at 30 bar;
- Temperature of the water of the deionised water supply 24, fed via conduits 45, 46, is 30 °C (ambient temperature);
- The desired temperature of the electrolysis gas (hydrogen and oxygen) is 40 °C.

The electrolysis gas separated from the KOH solution in the gas separating sections 20a, 21a enter the gas cooling sections 20b and 21b. At the top of the gas cooling sections 20b, 21b, deionised water required to offset the consumption of water in the electrolysis stack 13, is sprayed by nozzles (distributors) 22, 23. Based on the temperature requirements for the oxygen and hydrogen gas streams, the total amount of deionised water is split between the gas cooling sections 20b, 21b.

Water droplets fall from the top to the bottom of the gas cooling sections 20b, 21b, thereby directly contacting the electrolysis gas stream flowing from the bottom to the top. The design of the gas cooling sections 20b, 21b addresses the potential of the carry-over of droplets by the up-flowing electrolysis gas by employing a sufficiently large enough diameter of the gas cooling sections 20b, 21b to slow down the velocity of the electrolysis gas.

Assuming water saturated electrolysis gas streams, there should be no evaporation of water droplets from the deionised water supplied to the gas cooling sections, ensuring sufficient feed of deionised water to the electrolyser system without losses of deionised water.

The considered design temperature for the deionised water at the gas outlet of the gas cooling section 20b, 21b is 80 °C, thereby maintaining a temperature difference of 10 °C between the electrolysis gas to be cooled and the supplied deionised water. In other words, for the exemplary case, the cooling water should enter the top of the gas cooling section at 30 °C, and the electrolysis gas leaves the top of the gas cooling section at 40 °C. At the bottom of the gas cooling section, the cooling water leaves the gas cooling section at 80 °C, and the electrolysis gas enters the bottom of the gas cooling section at 90 °C.

As the temperature of the electrolysis gas decreases, so does the saturation vapour pressure of the water, and therefore the water in the electrolysis gas phase starts to condense. Extra condensation heat needs to be removed by the supplied deionised water. According to the aforementioned operating conditions, the saturation water vapour pressure above the KOH solution at 90 °C is 0,44 bar (gas inlet from gas separating section 20a, 21a to gas cooling section 20b, 21b) and 0,07 bar for the water saturation pressure above water at 40 °C (gas outlet of the gas cooling section 20b, 21b to conduit 47, 48). With this information, the amount of condensed water from the gas streams can be calculated. Those amounts are 0,70 kg/h condensed water in the hydrogen stream and 0,35 kg/h condensed water in the oxygen stream respectively.

For high pressure system, such as for the exemplary system which operates at 30 bar, the fraction of water in the electrolysis gas is comparatively low (e.g. at 1 bar y($H_2O$) = 44,0 %; at 30 bar y($H_2O$) = 1,5 %). The lowest operating pressure for which the cooling capacity of the deionised water is high enough in case only the water amount to compensate for water consumption by electrolysis is used as the cooling water is about 20 bar for alkaline electrolysis and about 25 bar for PEM electrolysis. However, those numbers are for orientation only and may deviate, depending on further parameters of the electrolysis system. The pressure difference between alkaline and PEM electrolysis is due to the fact that water has a lower saturation pressure in a concentrated KOH solution compared to its pure composition, as used in PEM electrolysis.

The following energy balance calculation shows that the amount of water required to balance out the water consumed by electrolysis is sufficient to cool the hydrogen and oxygen gas streams in view of the parameters as mentioned before.

Total mass flow of deionised water feed stream required to balance out water consumption = 54 kg/h;

$$\text{Isobaric heat capacity of water (30 - 80) °C} = 4,2 \text{ kJ/kg/°C;}$$

$$\text{Cooling energy available} = 54 \text{ kg/h} * 4,2 \text{ kJ/kg/°C} * (80\text{-}30)\text{°C} = 3,2 \text{ kW;}$$

Mass flow of hydrogen stream (68 Nm$^3$/h) = 6 kg/h;
Mass flow of oxygen stream (34 Nm$^3$/h) = 48 kg/h;

$$\text{Isobaric heat capacity of hydrogen (90 - 40) °C} = 14,4 \text{ kJ/kg/°C;}$$

$$\text{Isobaric heat capacity of oxygen (90 - 40) °C} = 0,9 \text{ kJ/kg/°C;}$$

Amount of water condensing from hydrogen stream
((90 - 40) °C @ 30bar) = 0,70 kg/h;
Amount of water condensing from oxygen stream
((90 - 40) °C @ 30bar) = 0,35 kg/h;

$$\text{Evaporation heat of water (90 - 40) °C} = 2358 \text{ kJ/kg;}$$

$$\text{Cooling water duty in catholyte (hydrogen) cooling section} =$$

$$6 \text{ kg/h} * 14,4 \text{ kJ/kg/°C} * (90 - 40) \text{ °C} + 0,70 \text{ kg/h} * 2358 \text{ kJ/kg} = 1,7 \text{ kW;}$$

$$\text{Cooling water duty in anolyte (oxygen) cooling section} =$$

$$48 \text{ kg/h} * 0,9 \text{ kJ/kg/°C} * (90 - 40) \text{ °C} + 0,35 \text{ kg/h} * 2358 \text{ kJ/kg} = 0,8 \text{ kW}$$

It follows that the cooling duty available in the supplied deionised water - which is 3,2 kW - is greater than the total required cooling duty (hydrogen and oxygen) of 2,5 kW.

**List of reference signs**

| | |
|----|----|
| 10 | electrolyser system (invention) |
| 11 | electrolyser system (state of the art) |
| 12 | direct current |
| 13 | electrolysis stack |

| 14 | anode section |
|---|---|
| 15 | cathode section |
| 16 | electrolyte cooler |
| 17a, 17b | cooling water |
| 18 | mixing device |
| 19 | pump |
| 20 | anode gas separator (invention) |
| 20a | gas separation section of anode gas separator |
| 20b | gas cooling section of anode gas separator |
| 21 | cathode gas separator (invention) |
| 21a | gas separating section of cathode gas separator |
| 21b | gas cooling section of cathode gas separator |
| 22, 23 | nozzle |
| 24 | water supply (invention) |
| 25a, 25b | pump |
| 26a, 26b | chiller |
| 30 | anode gas separator (state of the art) |
| 31 | cathode gas separator (state of the art) |
| 32 | water supply (state of the art) |
| 33a, 33b | heat exchanger |
| 34a, 34b | separator |
| 35 | pump |
| 36a, 36b | cooling water |
| 37 | hydraulic link |
| 40 - 55 | conduit |

**Claims**

1. Electrolyser system for water electrolysis, comprising
   an electrolysis stack and a direct current source, in order to generate oxygen and hydrogen as electrolysis gas by electrolysis of a water containing electrolysis medium, the electrolysis stack comprising an anode section configured to generate oxygen and a cathode section configured to generate oxygen;
   an anode gas separator configured to separate oxygen from the electrolysis medium and a cathode gas separator configured to separate hydrogen from the electrolysis medium;
   **characterized in that**
   at least one of the gas separators comprises a gas separating section and a gas cooling section, wherein
   the gas cooling section comprises a water inlet connected with a water supply,
   in order to supply cooling water to the gas cooling section of the gas separator,
   for the direct cooling of the electrolysis gas separated in the gas separating section of the gas separator within the gas cooling section.

2. The electrolyser system according to claim 1, wherein the cooling water supplied to the gas cooling section is used at least in part in order to balance out the water consumption resulting from the electrolysis.

3. Electrolyser system according to claim 1 or claim 2, wherein the gas separating section and the gas cooling section are arranged within one common housing.

4. Electrolyser system according to any one of the preceding claims, wherein the water inlet of the gas cooling section is arranged in order to conduct the electrolysis gas to be cooled and the cooling water supplied to the gas cooling section in counter-flow.

5. Electrolyser system according to any one of the preceding claims, wherein the gas cooling section of the gas separator is arranged vertically with respect to the perpendicular mediated by gravity, so that a stream of the cooling water can be conducted from top to bottom within the gas cooling section of the gas separator and a stream of the electrolysis gas can be conducted from bottom to top within the gas cooling section of the gas separator.

6. Electrolyser system according to any one of the preceding claims, wherein the electrolyser system is operated at elevated pressure, in particular at a pressure of 10 bar or more, or 15 bar or more, or 18 bar or more, preferably 20 bar or more, and wherein the water supplied to the gas cooling section of the gas separator is used to fully balance out the water consumption resulting from the electrolysis.

7. Electrolyser system according to any one of the preceding claims, wherein the electrolyser system is operated at elevated pressure, in particular at a pressure of 10 bar or more, or 15 bar or more, or 18 bar or more, preferably 20 bar or more, and wherein solely an amount of water required to fully balance out the water consumption resulting from electrolysis is supplied as the cooling water to the gas cooling section of the gas separator.

8. Electrolyser system according to claim 6 or 7, wherein the electrolyser system comprises an alkaline electrolyser, and the electrolyser system is operated at a pressure of 18 bar or more, preferably 20 bar or more.

9. Electrolyser system according to claim 6 or 7, wherein the electrolyser system comprises a proton exchange membrane (PEM) electrolyser, and the electrolyser system is operated at a pressure of 23 bar or more, preferably 25 bar or more.

10. Electrolyser system according to any one of the preceding claims, wherein the electrolyser system does not comprise a separator vessel to separate condensed water from cooled electrolysis gases.

11. Electrolyser system according to any one of the preceding claims, wherein the water inlet comprises a nozzle to introduce the cooling water as a spray into the gas cooling section of the gas separator.

12. Electrolyser system according to any one of the preceding claims, wherein a chiller is arranged between the water supply and the water inlet to pre-cool the cooling water supplied to the gas cooling section.

13. A process for performing electrolysis of a water containing electrolysis medium to generate oxygen and hydrogen as electrolysis gas, comprising the process steps of

- supplying a direct current to an electrolysis stack;
- subjecting the water containing electrolysis medium to electrolysis in the electrolysis stack, wherein the electrolysis stack comprises an anode section and a cathode section, wherein oxygen is generated in the anode section and hydrogen is generated in the cathode section;
- separating the generated oxygen from the electrolysis medium in an anode gas separator and separating the generated hydrogen from the electrolysis medium in a cathode gas separator;
- introducing cooling water from a water supply into at least one of the gas separators, for the direct cooling of the electrolysis gas separated in a gas separating section of the gas separator by the cooling water within a gas cooling section of the gas separator.

14. The process according to claim 13, wherein the electrolysis gas is cooled by the cooling water to 10 °C above ambient temperature or less.

15. The process according to claim 13 or 14, wherein the cooling water is heated to 10 °C below the operating temperature of the electrolyser system or less.

16. Use of the electrolysis system according to any one of claims 1 to 11 for the large-scale production of hydrogen by water electrolysis.

Fig. 1

EP 4 056 734 A1

Fig. 2

EP 4 056 734 A1

Europäisches
Patentamt

European
Patent Office

Office européen
des brevets

# EUROPEAN SEARCH REPORT

Application Number

EP 21 02 0140

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | WO 2006/009673 A2 (GENERAL MOTORS CORP)<br>26 January 2006 (2006-01-26) | 1-3,<br>6-10,13,<br>16 | INV.<br>C25B1/04<br>C25B9/05 |
| Y<br>A | * paragraphs [0010], [0028] - [0030],<br>[0048] - [0050], [0065]; claims 1, 5, 6,<br>13,19, 30; figures 2, 11, 13 * | 4,5,12<br>11,14,15 | C25B9/19<br>C25B9/77<br>C25B15/021<br>C25B15/08 |
| A | US 2004/101723 A1 (KRUPPA RAINER [DE] ET<br>AL) 27 May 2004 (2004-05-27)<br>* claims 1-5; figure 1 * | 1-16 | |
| A | US 2013/032472 A1 (HOELLER STEFAN [DE] ET<br>AL) 7 February 2013 (2013-02-07)<br>* paragraphs [0025] - [0029]; claims 1-20;<br>figure 1 * | 1-16 | |
| A | US 2016/068975 A1 (SMARSCH SVETLANA [DE]<br>ET AL) 10 March 2016 (2016-03-10)<br>* paragraphs [0022] - [0025]; claims 1-17<br>* | 1-16 | |
| A | US 2013/317959 A1 (JOOS NATHANIEL IAN [CA]<br>ET AL) 28 November 2013 (2013-11-28)<br>* paragraph [0086] - paragraph [0090] * | 1-16 | TECHNICAL FIELDS<br>SEARCHED (IPC)<br><br>C25B |
| Y | JP 2014 223590 A (AIR WATER INC)<br>4 December 2014 (2014-12-04)<br>* paragraphs [0044] - [0058], [0076];<br>figure 1 * | 4,5,12 | |

The present search report has been drawn up for all claims

| Place of search | Date of completion of the search | Examiner |
|---|---|---|
| Munich | 25 October 2021 | Teppo, Kirsi-Marja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 02 0140

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2021

| Patent document cited in search report | | Publication date | Patent family member(s) | | | Publication date |
|---|---|---|---|---|---|---|
| WO 2006009673 | A2 | 26-01-2006 | AU | 2005264935 | A1 | 26-01-2006 |
| | | | CN | 101427066 | A | 06-05-2009 |
| | | | DE | 112005001405 | T5 | 09-08-2007 |
| | | | KR | 20070039920 | A | 13-04-2007 |
| | | | US | 2006065302 | A1 | 30-03-2006 |
| | | | WO | 2006009673 | A2 | 26-01-2006 |
| US 2004101723 | A1 | 27-05-2004 | DE | 10053546 | A1 | 02-05-2002 |
| | | | EP | 1368512 | A2 | 10-12-2003 |
| | | | US | 2004101723 | A1 | 27-05-2004 |
| | | | WO | 0234970 | A2 | 02-05-2002 |
| US 2013032472 | A1 | 07-02-2013 | CA | 2795351 | A1 | 27-10-2011 |
| | | | CN | 102859042 | A | 02-01-2013 |
| | | | EP | 2377972 | A1 | 19-10-2011 |
| | | | JP | 2013525604 | A | 20-06-2013 |
| | | | KR | 20130008049 | A | 21-01-2013 |
| | | | PL | 2377972 | T3 | 29-08-2014 |
| | | | US | 2013032472 | A1 | 07-02-2013 |
| | | | WO | 2011131317 | A1 | 27-10-2011 |
| US 2016068975 | A1 | 10-03-2016 | CA | 2909628 | A1 | 23-10-2014 |
| | | | DK | 2792769 | T3 | 27-06-2016 |
| | | | EP | 2792769 | A1 | 22-10-2014 |
| | | | US | 2016068975 | A1 | 10-03-2016 |
| | | | WO | 2014170281 | A1 | 23-10-2014 |
| US 2013317959 | A1 | 28-11-2013 | CA | 2874782 | A1 | 05-12-2013 |
| | | | CA | 3101570 | A1 | 05-12-2013 |
| | | | CN | 104704147 | A | 10-06-2015 |
| | | | DK | 2855736 | T3 | 06-05-2019 |
| | | | EP | 2855736 | A1 | 08-04-2015 |
| | | | EP | 3613876 | A1 | 26-02-2020 |
| | | | ES | 2727345 | T3 | 15-10-2019 |
| | | | JP | 6591892 | B2 | 16-10-2019 |
| | | | JP | 6860622 | B2 | 14-04-2021 |
| | | | JP | 2015528851 | A | 01-10-2015 |
| | | | JP | 2019198221 | A | 14-11-2019 |
| | | | US | 2013317959 | A1 | 28-11-2013 |
| | | | US | 2015167182 | A1 | 18-06-2015 |
| | | | US | 2019249319 | A1 | 15-08-2019 |
| | | | WO | 2013177700 | A1 | 05-12-2013 |
| JP 2014223590 | A | 04-12-2014 | JP | 6231296 | B2 | 15-11-2017 |
| | | | JP | 2014223590 | A | 04-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6033549 A